# EUROPEAN PATENT SPECIFICATION

(11) **EP 2 800 024 B1**
(45) Date of publication and mention of the grant of the patent: **27.02.2019**
(21) Application number: 13166509.3
(22) Date of filing: 03.05.2013
(51) Int. Cl.: G06F 21/56, G06F 21/55, H04L 29/06, H04W 12/12

(54) **System and methods for identifying applications in mobile networks**
System und Verfahren zur Identifizierung von Anwendungen in mobilen Netzwerken
Système et procédés permettant d'identifier des applications dans des réseaux mobiles

(43) Date of publication of application: 05.11.2014
(73) Proprietor: Telefonaktiebolaget LM Ericsson (publ), 164 83 Stockholm (SE)
(72) Inventor: Hága, Péter, 1096 Budapest (HU); Kenesi, Zsolt, 1098 Budapest (HU); Toka, László, 1088 Budapest (HU); Veres, András, 1113 Budapest (HU)
(74) Representative: Ericsson

(56) References cited:
- EP-A1- 1 971 102
- WO-A1-2012/087685
- US-A1- 2011 167 491
- AUBREY-DERRICK SCHMIDT ET AL: "Monitoring Smartphones for Anomaly Detection", MOBILE NETWORKS AND APPLICATIONS, KLUWER ACADEMIC PUBLISHERS, BO, vol. 14, no. 1, 11 November 2008 (2008-11-11), pages 92-106, XP019684813, ISSN: 1572-8153
- PATCHA ET AL: "An overview of anomaly detection techniques: Existing solutions and latest technological trends", COMPUTER NETWORKS, ELSEVIER SCIENCE PUBLISHERS B.V., AMSTERDAM, NL, vol. 51, no. 12, 19 June 2007 (2007-06-19) , pages 3448-3470, XP022120633, ISSN: 1389-1286
- ASAF SHABTAI ET AL: "â Andromalyâ : a behavioral malware detection framework for android devices", JOURNAL OF INTELLIGENT INFORMATION SYSTEMS, KLUWER ACADEMIC PUBLISHERS, BO, vol. 38, no. 1, 6 January 2011 (2011-01-06), pages 161-190, XP019998836, ISSN: 1573-7675, DOI: 10.1007/S10844-010-0148-X

## Description

### TECHNICAL FIELD

This disclosure relates to a system, a user device, a network node, a computer program and methods for identifying applications in a mobile communication system.

### BACKGROUND

The multitude of smartphone applications, in terms of their sources, functionalities and developers, has led to a complex and uncontrolled supply of applications. The easy user access to these applications makes it simple for noxious and/or malicious applications to spread among devices of the users.

The uncontrolled nature of the supply of applications makes it difficult to identify malfunctioning applications.

There are controlled application repositories which apply a priori testing and verification of the available applications. However, testing usually involves a handful type of user devices or terminals, and the identification of application behavior on all existing, or large number of, terminal types has not been feasible.

The patent application EP 1971102 A1 concerns monitoring communication devices to detect malicious software. Operational data is determined and by processing the determined operational data by comparing said determined operational data with expected operational data, anomalous operational data is detected. Detection of anomalous operational data indicates an attack on a communication device by malicious software. This document is directed toward determining which communication device has anomalous operational data.

From Schmidt et al. ("Monitoring Smartphones for Anomaly Detection" in Mobile Network and Applications, Kluwer Academic Publishers, BO, vol.14, no. 1, 11 November 2008, pages 92-106) monitoring smartphones for anomaly detection is known. A number of operational features are collected and by using a linear prediction algorithm it is determined whether changes in features are anomalous or not. Gathered data is intended to be used for anomaly detection, analyzing data for distinguishing between normal and abnormal behavior.

From GB2461870 it is known a database of expected application behaviors distributed to mobile devices and used for detection of malware. Due to a limited number of applications running in a mobile device, it is feasible to profile the behavior of each individual application, particularly with respect to communications traffic. At each mobile device activity is monitored and compared with profiles of applications that are running. In the event that monitored behavior deviates from the normal behavior profile, it is determined whether the anomalous behavior indicates the presence of malware.

However, profiling certain applications is only viable if the applications and their behavior are known a priori, and their traffic can be separated from the network traffic generated by other applications.

### SUMMARY

It is an object of example embodiments of the invention to address at least some of the issues outlined above, and to eliminate an a priori knowledge about applications installed in a user device to identify an application based on resource utilization by the user device.

This object and others are achieved by the method and the device according to the appended independent claims, and by the embodiments according to the dependent claims.

According to one aspect, a method is provided for identifying an application installed in a user device of a communication system, the method being performed in the communication system. The method comprises obtaining information about user device resources utilized by the user device, and obtaining information about network resources utilized by the user device. The method also comprises storing the obtained information about user device resources utilized by the user device and the obtained information about network resources utilized by the user device. Also, the method comprises comparing the stored information with recent information about user device resources utilized by the user device and recent information about network resources utilized by the user device. Further, the method comprises identifying significant differences between the stored information and the recent information, and obtaining information about applications installed in the user device. Also the method comprises comparing the obtained information about installed applications with the identified significant differences. In addition, the method comprises identifying an application installed in the user device, based on the comparison between the obtained installation information and the identified significant differences.

According to another aspect a method is provided for identifying an application installed in a user device of a communication system, the method being performed in a network node. The method comprises receiving information about applications installed in a user device of the communication system, and receiving information about differences between recent and stored information about resources utilized by the user device. The method also comprises comparing the received information about differences between recent and stored information about resources utilized by the user device, with the obtained information about applications installed in the user device. In addition, the method comprises identifying an application installed in the user device, based on the comparison.

According to yet another aspect a network node is provided for identifying an application installed in a user device of a communication system. The network node comprises an interface that is configured to receive information about applications installed in the user device of the communication system, and to receive information about differences between recent and stored information about resources utilized by the user device. The network node also comprises a processor that is configured to be connected to the interface, and to compare the obtained information about applications installed in the user device, with the received information about differences between recent and stored information about resources utilized by the user device. The processor is also configured to identify an application installed in the user device, based on the comparison.

According to another aspect, a method is provided for enabling identification of an application installed in a user device of a communication system, the method being performed in the user device. The method comprises obtaining information about applications installed in the user device. The method further comprises monitoring user device resources utilized by the user device, and sending the information about applications installed in the user device towards a network node of the communication system. In addition, the method comprises sending information about user device resources utilized by the user device towards the network node of the communication system, for enabling identification of an application based on resources utilized by the user device.

According to yet another aspect, a user device is provided for enabling identification of an application installed in a user device of a communication system. The user device comprises a memory that is configured to store information about applications installed in the user device, and a processor that is configured to be connected to the memory, and to monitor user device resources utilized by the user device. The user device also comprises an interface that is configured to be connected to the processor, and to send information about applications installed in the user device and information about user device resources utilized by the user device towards the communication system.

According to yet another aspect a computer program product is provided that is adapted to comprise a computer program for enabling identification of an application installed in a user device of a communication system. The computer program comprises computer program code which, when run in the user device causes the user device to obtain information about applications installed in the user device, to monitor user device resource utilized by the user device, to send information about user device resources utilized by the user device towards the communication system, and to send information about applications installed in the user device to a network node of the communication system.

It is advantageous with embodiments of the present invention that noxious and/or malicious applications can be identified without prior knowledge about their traffic behavior.

Malicious and/or noxious applications can also be identified even if the malicious behavior starts well after the installation of the application. The proposed embodiments are able to identify noxious and/or malicious applications even if they were installed at different times on user devices of various subscribers.

It is further an advantage that the embodiments also enable a resource consumption reporting service offered to the subscribers by the operator which provides up-to-date or real time information about the network and user device utilization generated by the applications running on the user device of the subscriber.

### BRIEF DESCRIPTION OF THE DRAWINGS

Example embodiments will now be described in more detail, and with reference to the accompanying drawings, in which:
- Figure 1 schematically presents an overview of a communication system related to the embodiments of this invention;
- Figures 2, 3 and 5 present flow diagrams of methods of embodiments of the invention;
- Figure 4 presents a signaling diagram presenting embodiments of the invention; and
- Figures 6 and 7, schematically illustrate block diagrams of a user device and a network node, respectively, according to some embodiments of the invention.

### DETAILED DESCRIPTION

In the following description, different example embodiments of the invention will be described in more detail, with reference to accompanying drawings. For the purpose of explanation and not limitation, specific details are set forth, such as particular scenarios and techniques in order to provide a thorough understanding.

Embodiments of this invention relate to identification of an application installed in a user device based on resources utilized by the user device. Information about a normal or typical behavior of possible application is however not required to identify the application.

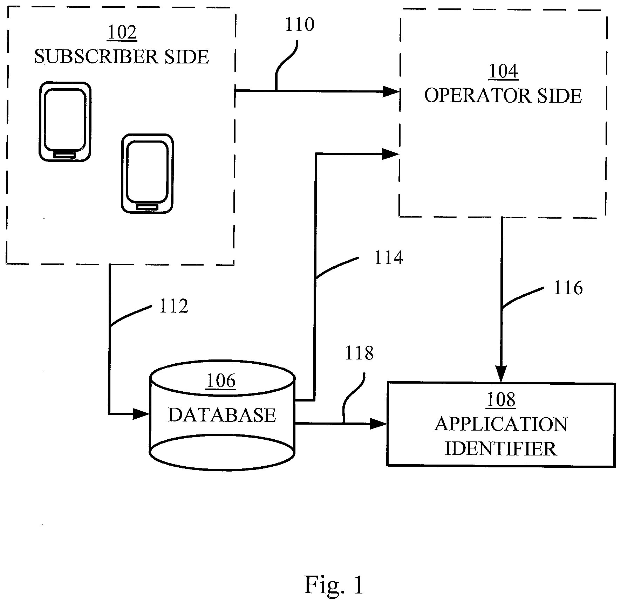

Figure 1 schematically presents a communication system related to embodiments of the present invention. In figure 1, a subscriber side 102, an operator side 104, a database 106 and an application server 108 are presented. The subscriber side typically comprises one or more user device. A user device monitors which resources are utilized by the user device. By monitoring the utilization in time, recent information as well as older or historical information about the utilization of resources is obtained.

Information about user device resources that are utilized by each user device is sent to the operator side 104. In 110, the information about which resources are used by the user device can comprise recent information about which resources are used by the user device. In 112, recent and historical information about user device resources that are utilized by a user device can be sent in 112 to the database 106. Historical information about which user device resources are utilized by the user device, is sent in 114. At the operator side 104, recent and historical information about the user device resources that are utilized by the user device, are received.

The operator side has also access to which network resources that are utilized by each user device. The operator side can therefore also obtain information about said network resources that are utilized by the user device.

The reason for also considering utilized network resources, is that applications or processes that are running in a user device also utilize network resources. Based on information about which network and user device resources that are used, a profile of utilized resources can be created for each user device. In a comparison between recently used resources, as obtained from information about recent resource utilization by the user device, and the created profiles, significant differences is resource utilization can be identified. In 116 these significant differences can be sent to the application identifier 108.

In 118, the application identifier 108 also receives information about applications being installed in each user device. By comparing the significant differences as obtained above and the installation information of applications installed in user device, preferably, the date and time of installed applications, applications can be identified in the application identifier 108.

The identification of applications installed can be used to identify applications that utilize resources in the user device and/or network to such an extent that the applications can be classified as noxious and/or malicious.

The identification of applications installed can be used to determine the utilization of resources for each application running in the user device. A resource utilization or consumption reporting service may thus be offered to subscribers by the operator, which service would provide a close to real time information about the resources utilized or consumed by application running on the user device of a subscriber. Information reporting the utilization and/or consumption can be sent to the subscriber on an application-by application basis, i.e. information can be provided for each installed application at a time.

The actions performed at the subscriber side may be realized by an application that is either pre-installed on the user device by the operator or down-loadable from for instance an application store.

Down below is presented two flow-diagrams of methods being performed in a user device and a network node, respectively, of a communication system.

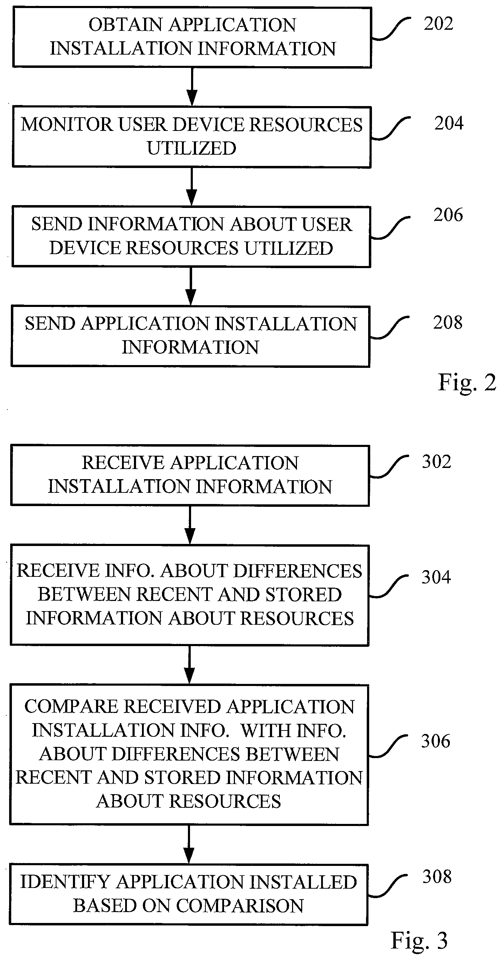

Figure 2 presents a flow-diagram of a method for enabling identification of an application installed in a user device of a communication system, according to embodiments of the invention. The method is performed in the user device, and comprises obtaining 202 information about applications installed in the user device. The method further comprises monitoring 204 user device resources utilized by the user device, and sending 206 information about user device resources utilized by the user device, towards the network node of the communication system. In addition, the method also comprises sending 208 the information about applications installed in the user device towards a network node of the communication system, for enabling identification of an application based on resources utilized by the user device.

Figure 3 presents a flow-diagram of a method for identifying an application installed in a user device of a communication system, the method being performed in a network node, according to embodiments of the invention. The method comprises receiving 302 information about applications installed in a user device of the communication system, and receiving 304 information about differences between recent and stored information about resources utilized by the user device. The method also comprises comparing 306 the received information about differences between recent and stored information about resources utilized by the user device, with the obtained information about applications installed in the user device. In addition, the method comprises identifying 308 an application installed in the user device, based on the comparison.

The information about differences between recent and stored information about resources utilized by the user device may comprise information about differences between recent information about user device and network resources utilized by the user device, and stored information about user device and network resources utilized by the user device.

The comparing of the obtained information about installed applications with the identified significant differences may comprise aligning the obtained information about installed applications and the identified significant differences, with respect to time.

Identifying may further comprise identifying features of the obtained information about installed applications and the identified significant differences, coinciding with respect to time.

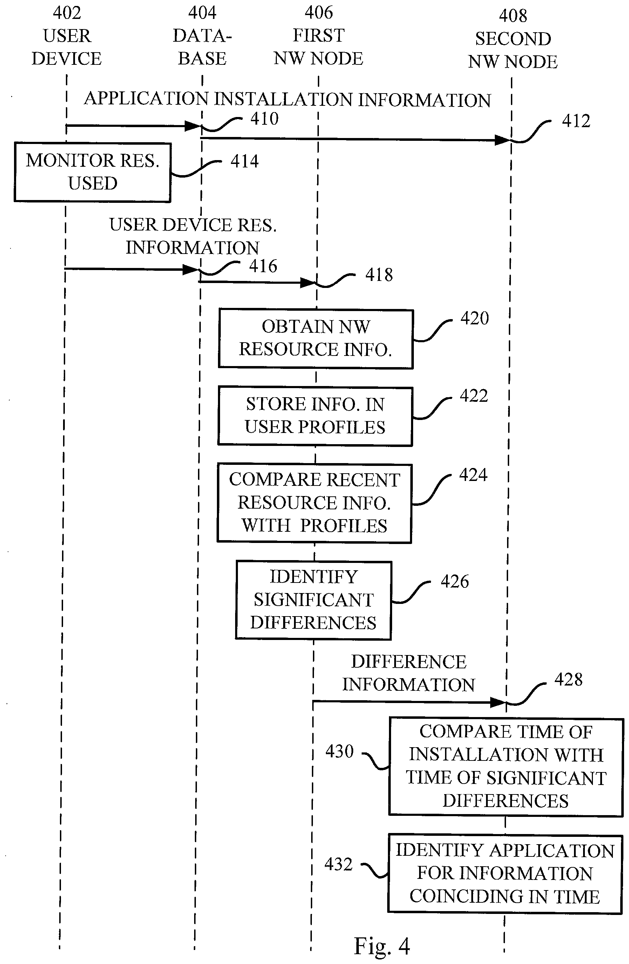

Figure 4 presents a signaling diagram of signaling between entities of a communication system according to some embodiments of the invention. The signaling diagram presents signaling between a user device 402, a database 404, a first network node 406 and second network node 408, according to some embodiments of the present invention.

It can be mentioned that the first network node 406 is typically located within the premises of the mobile operator of the user device. The second network node 408 may be located at another location, such as belonging to a third party, or be located at the operator.

The user device may register a list of applications that are installed in the user device. In 410, the user device can send application installation information to the database 404. This information may comprise a list of installed applications in the user device. This information may also comprise the date and time of installation of the applications installed in the used device.

In 412 the user device can also send the application installation information to the second network node 408. Alternatively, the database 404 can forward the application installation information as received from the user device 402 to the second network node 408.

In 414 the user device monitors the resources used by the user device. These resources comprise user device resources consumed or utilized by the user device. These resources may comprise on-screen and back-ground activities of applications. On-screen activities may relate to the on-screen time. Background activities may comprise information on central processing unit cycles in a processor of the user device, to memory allocation of a memory of the user device and input/output operations relating to an interface of the user device.

In 416 the user device sends information about the user device resources utilized by the user device to the database. The information about the user device resources utilized by the user device can be sent or reported periodically. The period for periodical sending or reporting can be e.g. a day, an hour, 15 minutes, etc. By periodically sending, recent information can also be provided. Historical information may thus also be achieved.

In 418 the database can forward the information about the resources utilized by the user device, as obtained in 416, to the first network node 406. Alternatively, the user device 402 may directly sent information about the user device resources utilized by the user device to the fist network node 406, in 418.

In 420, the first network node obtains information about the network resources that are used by each user device. Information about the network resources that are used may comprise information about circuit switched traffic in the network, packet switched traffic, signaling events, voice calls, visited webpages, as well as information about malicious hosts, "no uniform resource location" hosts, and information about text messages, such as short message services.

In 422, the obtained information about the utilized resources of each user is stored. The information may be stored in log files. This information may be stored periodically achieving a time granularity of the stored information. By periodically storing the information both recent and historical information may be achieved. The information may further be stored in user device profiles of information of used resources.

It is mentioned that a profile can be created for each user device. The profile may comprise information on obtained communication patterns, derived measures of signaling and user plane traffic, and other ergodic statistics that are typical to the user device or subscriber, such as on-screen time, daily central processing unit cycles, memory allocation, input/output load patterns, to mention a few examples.

In 424, recent information about the resource utilization is compared with the stored information, such as with the user device profiles. Thus recent information about the user device resource utilization and the network resource utilization can be compared with both stored information about the user device resource utilization and the network resource utilization.

In 426, significant differences are identified between recent and stored resource utilization information. Identified significant differences may be detected by that one or more parameters of the compared information breach a threshold. The comparison is typically a statistical comparison involving several different parameters. The identified significant differences typically comprise differences noticed along the time line.

The identification may be performed by time series analysis methods applied to the compared information, such as level-shift detection, pattern recognition by applying adaptive and/or predefined thresholds.

In 428, the identified significant difference information is sent to the second network node 408.

In 430, the received significant difference information is compared with the installation information about applications installed in the user device.

Comparing the obtained information about installed applications with the identified significant differences, may comprise aligning the obtained information about installed applications and the identified significant differences, with respect to time.

The second network node may also be configured to use group statistics in the comparison of obtained information about installed applications with the identified significant differences, since information may be obtained for a large number of user devices.

The processor of the second network node 700 may thus be configured to use group statistics for obtained information about applications installed in a number of user devices, with the received information about differences between recent and stored information about resources utilized by said number of user devices.

Group statistics enable the detection of features of a fraction of user devices out of those having the same application installed. In 432, an application is identified based on information coinciding in time. Applications whose date and time of installation coincides with the change in traffic behavior, are typically identified. Moreover, applications whose data and time can be correlated with the change in traffic behavior may also be identified. This means that the installation time as such does not have to coincide with the time of the identified behavior change. An installed malicious or noxious application may not be harmful from the time of installation but become malicious or noxious at a later stage.

Applications can thus be identified for application whose date and time of installation coincide with the change in traffic behavior indicated in 426.

The detection of significant differences in 426 is an indication of suspicious and potentially noxious and/or malicious applications.

Malicious/noxious applications are typically identified by detection of significant difference at most user devices on which they are installed.

Other applications may cause a significant difference in a fraction of the user devices in which they are installed.

In a first example, an application "kill_the_cpu" is identified suspicious simultaneously at all the user device in which it is installed.

In a second example, an application "hype" is identified as suspicious only at 1-2% of the user devices in which it is installed causing these user devices to start using it extensively for long, high definition video chats thereby dramatically increasing their network traffic.

In the first example, close to 100% of the user devices having the applications installed will be detected by the first network node. In the second example, the fraction of user devices will correspond to a much lower number of user devices.

When applying group statistics, the fraction of the user devices at which the feature is detected may be calculated as the number of user devices for which the application is identified as suspicious, divided by the total number of user devices having the application installed.

If there are no significant differences identified, no further comparison is made in 430, since no application is to be identified.

It should be mentioned that if significant differences are identified for many but not all subscribers having the same application installed, there is an option to provide identification information to all subscribers based on the identification information obtained based on many of the user devices.

Upon detecting an malicious or noxious application the operator of the user device(s) may alert an application store in order to remove identified malicious or noxious from a list of downloadable applications.

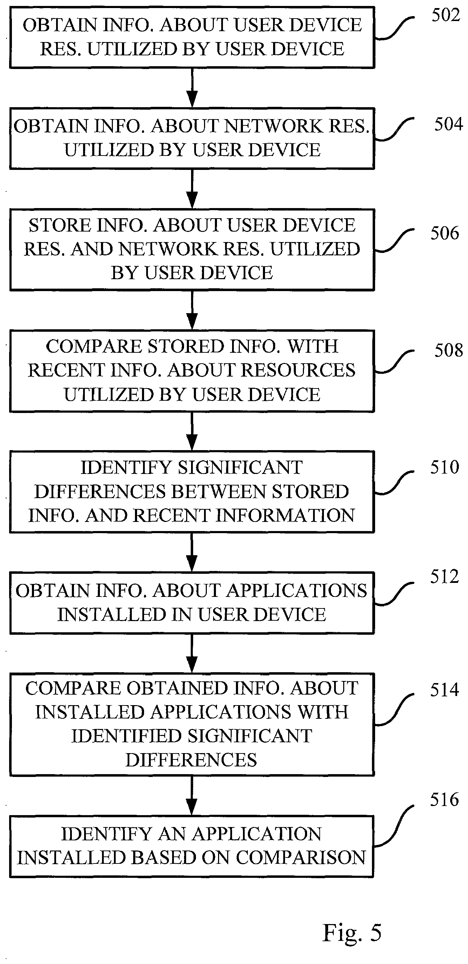

Figure 5 presents a flow-diagram of a method for identifying an application installed in a user device of a communication system, the method being performed in the communication system, according to embodiments of the invention. The method comprises obtaining 416, 502 information about user device resources utilized by the user device, and obtaining 420, 504 information about network resources utilized by the user device. The method also comprises storing 422, 506 the obtained information about user device resources utilized by the user device and the obtained information about network resources utilized by the user device. Also, the method comprises comparing 424, 508 the stored information with recent information about user device resources utilized by the user device and recent information about network resources utilized. Further, the method comprises identifying 426, 510 significant differences between the stored information and the recent information, and obtaining 412, 512 information about applications installed in the user device. Also the method comprises comparing 430, 514 the obtained information about installed applications with the identified significant differences. In addition, the method comprises identifying 432, 516 an application installed in the user device, based on the comparison between the obtained installation information and the identified significant differences.

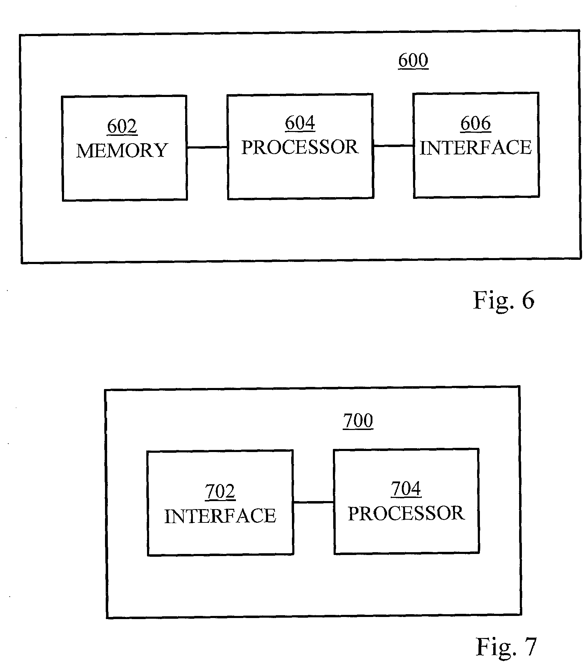

Figure 6 schematically presents a block diagram of a user device 600 for enabling identification of an application installed in a user device of a communication system. The user device comprises a memory 602 that is configured to store information about applications installed in the user device, and a processor 604 that is configured to be connected to the memory, and to monitor user device resources utilized by the user device. The user device also comprises an interface 606 that is configured to be connected to the processor, and to send information about applications installed in the user device and information about user device resources utilized by the user device towards the communication system.

The information about applications installed within the user device, may comprise information about when the applications were installed at the user device.

Figure 7 schematically presents a block diagram of a network node 700 for identifying an application installed in a user device 600 of a communication system, according to embodiments of the present invention. The network node 700 comprises an interface 702 that is configured to receive information about applications installed in the user device of the communication system, and to receive information about differences between recent and stored information about resources utilized by the user device. The network node 700 also comprises a processor 704 that is configured to be connected to the interface 702, and to compare the obtained information about applications installed in the user device, with the received information about differences between recent and stored information about resources utilized by the user device. The processor 704 is also configured to identify an application installed in the user device, based on the comparison.

Within the network node the information about applications installed may comprise information about when the applications were installed at the user device 402, 600.

Within the network node, the stored information about resources utilized by the user device may comprise a user device profile of utilized resources.

The processor 704 of the network node may further be configured to align the obtained information about installed applications and the identified significant differences, with respect to time.

The processor 704 of the network node may further be configured to identify features of the obtained information about installed applications and the identified significant differences, coinciding with respect to time.

Embodiments of the present invention also comprise a computer program for enabling identification of an application installed in a user device of a communication system. The computer program comprises computer program code which, when run in the user device causes the user device to obtain 202 information about applications installed in the user device, to monitor 204 user device resource utilized by the user device, to send 206 information about user device resources utilized by the user device towards the communication system, and to send 208 information about applications installed in the user device to a network node of the communication system.

The proposed embodiments come with a number of advantages of which some are:
It is an advantage that noxious and/or malicious applications can be identified without prior knowledge about their traffic behavior.

Malicious and/or noxious applications can also be identified even if the malicious behavior starts well after the installation of the application. The proposed embodiments are able to identify noxious and/or malicious applications even if they were installed at different times on user devices of various subscribers.

It is further an advantage that the embodiments also enable a resource consumption reporting service offered to the subscribers by the operator which provides up-to-date or real time information about the network and user device utilization generated by the applications running on the user device of the subscriber.

It may be further noted that the above described embodiments are only given as examples and should not be limiting to the present invention, since other solutions, uses, objectives, and functions are apparent within the scope of the invention as claimed in the accompanying patent claims.

## Claims

1. A method for identifying an application installed in a user device (402, 600) of a communication system, the method being performed in the communication system, the method comprising:
- obtaining (416, 502) information about user device resources utilized by the user device;
- obtaining (420, 504) information about network resources utilized by the user device;
- storing (422, 506) the obtained information about user device resources utilized by the user device and the obtained information about network resources utilized by the user device,
- comparing (424, 508) the stored information with recent information about user device resources utilized by the user device and recent information about network resources utilized by the user device; and
- identifying (426, 510) significant differences between the stored information and the recent information;
**characterized by**
identifying significant differences between the stored information and the recent information is performed by detecting that one or more parameters of the compared information breach a threshold;
the method further comprising:
- obtaining (412, 512) information about applications installed in the user device;
- comparing (430, 514) the obtained information about installed applications with the identified significant differences by aligning the information about installed application with the breach of the threshold, with respect to time; and
- identifying (432, 516) an application installed in the user device, if the date and time of installation of said application match and/or is correlated with the date and time of breach of the threshold

2. A method for identifying an application installed in a user device (402, 600) of a communication system, the method being performed in a network node (408, 700) of the communication system, the method comprising:
- receiving (428, 304), from another network node (406) of the communication system, information about differences between recent and stored information about user device and network resources utilized by the user device
**characterized by**
that the differences comprise significant differences identified by said another network node (406) between the recent and the stored information by detecting that one or more parameters of the thus compared information breach a threshold;
the method further comprising:
- receiving (412, 302) information about applications installed in a user device (402, 600) of the communication system;
- comparing (430, 306) the received information about differences between recent and stored information about user device and network resources utilized by the user device, with the obtained information about applications installed in the user device by aligning the information about applications installed in the user device with the breach of the threshold, with respect to time; and
- identifying (432, 308) an application installed in the user device, if the date and time of installation of said application match and/or is correlated with the date and time of the breach of the threshold.

3. The method according to claim 2, wherein the information about differences between recent and stored information about user device and network resources utilized by the user device (402, 600), comprises information about differences between recent information about user device and network resources utilized by the user device, and stored information about user device and network resources utilized by the user device.

4. The method according to claim 2 or 3, wherein identifying (432, 308) comprises identifying features of the obtained information about installed applications and the identified significant differences, coinciding with respect to time.

5. A network node (408, 700) for identifying an application installed in a user device (402, 600) of a communication system, the network node comprising:
- an interface (702) configured to receive (304, 428), from another network node (406) of the communication system, information about differences, identified by said another network node (406), between recent and stored information about user device and network resources utilized by the user device; and
- a processor (704) configured to be connected to the interface (702);
**characterized in, that**
- the differences comprise significant differences identified by said another network node (406) between the recent and the stored information by detecting that one or more parameters of the thus compared information breach a threshold;
- the interface is further configured to receive (302, 412) information about applications installed in the user device of the communication system, and
- the processor is further configured to compare (306, 430) the obtained information about applications installed in the user device, with the received information about differences between recent and stored information about user device and network resources utilized by the user device by aligning the information about installed applications with the breach of the threshold, with respect to time; and to identify (308, 432) an application installed in the user device, if the date and time of installation of said application match and/or is correlated with the date and time of the breach of the threshold.

6. The network node (700) according to claim 5, where the information about applications installed comprises information about when the applications were installed at the user device (402, 600).

7. The network node (700) according to claim 5 or 6, wherein the stored information about user device and network resources utilized by the user device comprises a user device profile of utilized resources.

8. The network node (700) according to any of claims 5 to 7, wherein the processor (704) further is configured to align the obtained information about installed applications and the identified significant differences, with respect to time.

9. The network node (700) according to any of claims 5 to 8, wherein the processor (704) further is configured to use group statistics for obtained information about applications installed in a number of user devices, with the received information about differences between recent and stored information about user device and network resources utilized by said number of user devices.

10. The network node (700) according to any of claims 5 to 9, wherein the processor (704) further is configured to identify features of the obtained information about installed applications and the identified significant differences, coinciding with respect to time.

## Patentansprüche

1. Verfahren zum Identifizieren einer Anwendung, die in einer Benutzervorrichtung (402, 600) eines Kommunikationssystems installiert ist, wobei das Verfahren in dem Kommunikationssystem durchgeführt wird, das Verfahren umfassend:
- Erhalten (416, 502) von Informationen über Benutzervorrichtungsressourcen, die von der Benutzervorrichtung benutzt werden;
- Erhalten (420, 504) von Informationen über Netzwerkressourcen, die von der Benutzervorrichtung benutzt werden;
- Speichern (422, 506) der erhaltenen Informationen über Benutzervorrichtungsressourcen, die von der Benutzervorrichtung benutzt werden, und der erhaltenen Informationen über Netzwerkressourcen, die von der Benutzervorrichtung benutzt werden,
- Vergleichen (424, 508) der gespeicherten Informationen mit jüngsten Informationen über Benutzervorrichtungsressourcen, die von der Benutzervorrichtung benutzt werden, und jüngsten Informationen über Netzwerkressourcen, die von der Benutzervorrichtung benutzt werden; und
- Identifizieren (426, 510) signifikanter Unterschiede zwischen den gespeicherten Informationen und den jüngsten Informationen;
**dadurch gekennzeichnet, dass**
ein Identifizieren signifikanter Unterschiede zwischen den gespeicherten Informationen und den jüngsten Informationen durch Detektieren durchgeführt wird, dass einer oder mehrere Parameter der verglichenen Informationen einen Schwellenwert passieren;
das Verfahren ferner umfassend:
- Erhalten (412, 512) von Informationen über Anwendungen, die in der Benutzervorrichtung installiert sind;
- Vergleichen (430, 514) der erhaltenen Informationen über installierte Anwendungen mit den identifizierten signifikanten Differenzen durch Ausrichten der Informationen über installierte Anwendung mit dem Passieren des Schwellenwerts in Bezug auf Zeit; und
- Identifizieren (432, 516) einer Anwendung, die in der Benutzervorrichtung installiert ist, falls das Datum und die Zeit einer Installation der Anwendung mit dem Datum und der Zeit eines Passierens des Schwellenwerts übereinstimmen und/oder korrelieren.

2. Verfahren zum Identifizieren einer Anwendung, die in einer Benutzervorrichtung (402, 600) eines Kommunikationssystems installiert ist, wobei das Verfahren in einem Netzwerkknoten (408, 700) des Kommunikationssystems durchgeführt wird, das Verfahren umfassend:
- Empfangen (428, 304) von einem anderen Netzwerkknoten (406) des Kommunikationssystems von Informationen über Differenzen zwischen jüngsten und gespeicherten Informationen über Benutzervorrichtungs- und Netzwerkressourcen, die durch die Benutzervorrichtung verwendet werden,
**dadurch gekennzeichnet, dass**
die Differenzen signifikante Differenzen zwischen den jüngsten und gespeicherten Informationen umfassen, die durch den anderen Netzwerkknoten (406) durch Detektieren, dass einer oder mehrere Parameter der derart verglichenen Informationen einen Schwellenwert passieren, identifiziert werden;
das Verfahren ferner umfassend:
- Empfangen (412, 302) von Informationen über Anwendungen, die in einer Benutzervorrichtung (402, 600) des Kommunikationssystems installiert sind;
- Vergleichen (430, 306) der empfangenen Informationen über Differenzen zwischen jüngsten und gespeicherten Informationen über Benutzervorrichtungs- und Netzwerkressourcen, die durch die Benutzervorrichtung verwendet werden, mit den erhaltenen Informationen über Anwendungen, die in der Benutzervorrichtung installiert sind, durch Ausrichten der Informationen über Anwendungen, die in der Benutzervorrichtung installiert sind, mit dem Passieren des Schwellenwerts in Bezug auf Zeit; und
- Identifizieren (432, 308) einer Anwendung, die in der Benutzervorrichtung installiert ist, falls das Datum und die Zeit einer Installation der Anwendung mit dem Datum und der Zeit eines Passierens des Schwellenwerts übereinstimmen und/oder korrelieren.

3. Verfahren nach Anspruch 2, wobei die Informationen über Differenzen zwischen jüngsten und gespeicherten Informationen über Benutzervorrichtungs- und Netzwerkressourcen, die durch die Benutzervorrichtung (402, 600) verwendet werden, Informationen über Differenzen zwischen jüngsten Informationen über Benutzervorrichtungs- und Netzwerkressourcen, die durch die Benutzervorrichtung verwendet werden, und gespeicherten Informationen über Benutzervorrichtungs- und Netzwerkressourcen, die durch die Benutzervorrichtung verwendet werden, umfassen.

4. Verfahren nach Anspruch 2 oder 3, wobei ein Identifizieren (432, 308) ein Identifizieren von Merkmalen der erhaltenen Informationen über installierte Anwendungen und der identifizierten signifikanten Differenzen, die in Bezug auf Zeit übereinstimmen, umfasst.

5. Netzwerkknoten (408, 700) zum Identifizieren einer Anwendung, die in einer Benutzervorrichtung (402, 600) eines Kommunikationssystems installiert ist, der Netzwerkknoten umfassend:
- eine Schnittstelle (702), die konfiguriert ist zum Empfangen (304, 428) von einem anderen Netzwerkknoten (406) des Kommunikationssystems von Informationen über Differenzen, die durch den anderen Netzwerkknoten (406) identifiziert werden, zwischen jüngsten und gespeicherten Informationen über Benutzervorrichtungs- und Netzwerkressourcen, die durch die Benutzervorrichtung verwendet werden; und
- einen Prozessor (704), der konfiguriert ist, mit der Schnittstelle (702) verbunden zu werden;
**dadurch gekennzeichnet, dass**
- die Differenzen signifikante Differenzen umfassen, die durch den anderen Netzwerkknoten (406) zwischen den jüngsten und den gespeicherten Informationen durch Detektieren, dass einer oder mehrere Parameter der derart verglichenen Informationen einen Schwellenwert passieren, identifiziert werden;
- die Schnittstelle ferner konfiguriert ist zum Empfangen (302, 412) von Informationen über Anwendungen, die in der Benutzervorrichtung des Kommunikationssystems installiert sind, und
- der Prozessor ferner konfiguriert ist zum Vergleichen (306, 430) der empfangenen Informationen über Anwendungen, die in der Benutzervorrichtung installiert sind, mit den empfangenen Informationen über Differenzen zwischen jüngsten und gespeicherten Informationen über Benutzervorrichtungs- und Netzwerkressourcen, die durch die Benutzervorrichtung verwendet werden, durch Ausrichten der Informationen über installierte Anwendungen mit dem Passieren des Schwellenwerts in Bezug auf Zeit; und
- zum Identifizieren (308, 432) einer Anwendung, die in der Benutzervorrichtung installiert ist, falls das Datum und die Zeit einer Installation der Anwendung mit dem Datum und der Zeit eines Passierens des Schwellenwerts übereinstimmen und/oder korrelieren.

6. Netzwerkknoten (700) nach Anspruch 5, wobei die Informationen über installierte Anwendungen Informationen darüber umfassen, wann die Anwendungen bei der Benutzervorrichtung (402, 600) installiert wurden.

7. Netzwerkknoten (700) nach Anspruch 5 oder 6, wobei die gespeicherten Informationen über Benutzervorrichtungs- und Netzwerkressourcen, die durch die Benutzervorrichtung verwendet werden, ein Benutzervorrichtungsprofil benutzter Ressourcen umfassen.

8. Netzwerkknoten (700) nach einem der Ansprüche 5 bis 7, wobei der Prozessor (704) ferner konfiguriert ist, die erhaltenen Informationen über installierte Anwendungen und die identifizierten signifikanten Differenzen in Bezug auf Zeit auszurichten.

9. Netzwerkknoten (700) nach einem der Ansprüche 5 bis 8, wobei der Prozessor (704) ferner konfiguriert ist, Gruppenstatistiken für erhaltene Informationen über installierte Anwendungen in einer Anzahl von Benutzervorrichtungen mit den erhaltenen Informationen über Differenzen zwischen jüngsten und gespeicherten Informationen über Benutzervorrichtungs- und Netzwerkressourcen, die durch die Anzahl von Benutzervorrichtungen benutzt werden, zu verwenden.

10. Netzwerkknoten (700) nach einem der Ansprüche 5 bis 9, wobei der Prozessor (704) ferner konfiguriert ist, Merkmale der erhaltenen Informationen über installierte Anwendungen und die identifizierten signifikanten Differenzen, die in Bezug auf Zeit übereinstimmen, zu identifizieren.

## Revendications

1. Procédé d'identification d'une application installée dans un dispositif d'utilisateur (402, 600) d'un système de communication, le procédé étant effectué dans le système de communication, le procédé comprenant :
- l'obtention (416, 502) d'informations relatives à des ressources de dispositif d'utilisateur utilisées par le dispositif d'utilisateur ;
- l'obtention (420, 504) d'informations relatives à des ressources de réseau utilisées par le dispositif d'utilisateur ;
- la mémorisation (422, 506) des informations obtenues relatives à des ressources de dispositif d'utilisateur utilisées par le dispositif d'utilisateur et des informations obtenues relatives à des ressources de réseau utilisées par le dispositif d'utilisateur,
- la comparaison (424, 508) des informations mémorisées à des informations récentes relatives à des ressources de dispositif d'utilisateur utilisées par le dispositif d'utilisateur et à des informations récentes relatives à des ressources de réseau utilisées par le dispositif d'utilisateur ; et
- l'identification (426, 510) de différences significatives entre les informations mémorisées et les informations récentes ;
**caractérisé en ce que**
l'identification de différences significatives entre les informations mémorisées et les informations récentes est effectuée par la détection qu'un ou plusieurs paramètres des informations comparées ne respectent pas un seuil ;
le procédé comprenant en outre :
- l'obtention (412, 512) d'informations relatives à des applications installées dans le dispositif d'utilisateur ;
- la comparaison (430, 514) des informations obtenues relatives à des applications installées aux différences significatives identifiées par l'alignement des informations relatives aux applications installées avec le non-respect du seuil, dans le temps ; et
- l'identification (432, 516) d'une application installée dans le dispositif d'utilisateur, si la date et l'heure d'installation de ladite application correspondent à et/ou sont corrélées avec la date et l'heure du non-respect du seuil.

2. Procédé d'identification d'une application installée dans un dispositif d'utilisateur (402, 600) d'un système de communication, le procédé étant effectué dans un noeud de réseau (408, 700) du système de communication, le procédé comprenant :
- la réception (428, 304), en provenance d'un autre noeud de réseau (406) du système de communication, d'informations relatives à des différences entre des informations récentes et des informations mémorisées relatives à un dispositif d'utilisateur et à des ressources de réseau utilisées par le dispositif d'utilisateur,
**caractérisé en ce que**
les différences comprennent des différences significatives, identifiées par ledit autre noeud de réseau (406), entre les informations récentes et les informations mémorisées, par la détection qu'un ou plusieurs paramètres des informations ainsi comparées ne respectent pas un seuil ;
le procédé comprenant en outre :
- la réception (412, 302) d'informations relatives à des applications installées dans un dispositif d'utilisateur (402, 600) du système de communication ;
- la comparaison (430, 306) des informations reçues relatives à des différences entre des informations récentes et des informations mémorisées relatives à un dispositif d'utilisateur et à des ressources de réseau utilisées par le dispositif d'utilisateur, aux informations obtenues relatives à des applications installées dans le dispositif d'utilisateur par l'alignement des informations relatives aux applications installées dans le dispositif d'utilisateur avec le non-respect du seuil, dans le temps ; et
- l'identification (432, 308) d'une application installée dans le dispositif d'utilisateur, si la date et l'heure d'installation de ladite application correspondent à et/ou sont corrélées avec la date et l'heure du non-respect du seuil.

3. Procédé selon la revendication 2, dans lequel les informations relatives à des différences entre des informations récentes et des informations mémorisées relatives à un dispositif d'utilisateur et à des ressources de réseau utilisées par le dispositif d'utilisateur (402, 600) comprennent des informations relatives à des différences entre des informations récentes relatives à un dispositif d'utilisateur et à des ressources de réseau utilisées par le dispositif d'utilisateur, et des informations mémorisées relatives à un dispositif d'utilisateur et à des ressources de réseau utilisées par le dispositif d'utilisateur.

4. Procédé selon la revendication 2 ou 3, dans lequel l'identification (430, 308) comprend l'identification de caractéristiques des informations obtenues relatives à des applications installées et des différences significatives identifiées, qui coïncident dans le temps.

5. Noeud de réseau (408, 700) permettant l'identification d'une application installée dans un dispositif d'utilisateur (402, 600) d'un système de communication, le noeud de réseau comprenant :
- une interface (702) configurée pour la réception (304, 428), en provenance d'un autre noeud de réseau (406) du système de communication, d'informations relatives à des différences, identifiées par ledit autre noeud de réseau (406), entre des informations récentes et des informations mémorisées relatives à un dispositif d'utilisateur et à des ressources de réseau utilisées par le dispositif d'utilisateur ; et
- un processeur (704) configuré pour être relié à l'interface (702) ;
**caractérisé en ce que**
- les différences comprennent des différences significatives, identifiées par ledit autre noeud de réseau (406), entre les informations récentes et les informations mémorisées, par la détection qu'un ou plusieurs paramètres des informations ainsi comparées ne respectent pas un seuil ;
- l'interface est en outre configurée pour la réception (302, 412) d'informations relatives à des applications installées dans le dispositif d'utilisateur du système de communication ; et
- le processeur est en outre configuré pour la comparaison (306, 430) des informations obtenues relatives à des applications installées dans le dispositif d'utilisateur, aux informations reçues relatives à des différences entre des informations récentes et des informations mémorisées relatives à un dispositif d'utilisateur et à des ressources de réseau utilisées par le dispositif d'utilisateur, par l'alignement des informations relatives aux applications installées avec le non-respect du seuil, dans le temps ; et l'identification (308, 432) d'une application installée dans le dispositif d'utilisateur, si la date et l'heure d'installation de ladite application correspondent à et/ou sont corrélées avec la date et l'heure du non-respect du seuil.

6. Noeud de réseau (700) selon la revendication 5, dans lequel les informations relatives à des applications installées comprennent des informations relatives au moment auquel les applications ont été installées au dispositif d'utilisateur (402, 600).

7. Noeud de réseau (700) selon la revendication 5 ou 6, dans lequel les informations mémorisées relatives à un dispositif d'utilisateur et à des ressources de réseau utilisées par le dispositif d'utilisateur comprennent un profil de dispositif d'utilisateur des ressources utilisées.

8. Noeud de réseau (700) selon l'une quelconque des revendications 5 à 7, dans lequel le processeur (704) est en outre configuré pour l'alignement des informations obtenues relatives à des applications installées et des différences significatives identifiées, dans le temps.

9. Noeud de réseau (700) selon l'une quelconque des revendications 5 à 8, dans lequel le processeur (704) est en outre configuré pour l'utilisation de statistiques de groupe pour des informations obtenues relatives à des applications installées dans un nombre de dispositifs d'utilisateur, avec les informations reçues relatives à des différences entre des informations récentes et des informations mémorisées relatives à un dispositif d'utilisateur et des ressources de réseau utilisées par ledit nombre de dispositifs d'utilisateur.

10. Noeud de réseau (700) selon l'une quelconque des revendications 5 à 9, dans lequel le processeur (704) est en outre configuré pour l'identification de caractéristiques des informations obtenues relatives à des applications installées et des différences significatives identifiées, qui coïncident dans le temps.
